# FASCICULE DE BREVET EUROPEEN

(11) **EP 4 154 250 B1**
(45) Date de publication et mention de la délivrance du brevet: **29.04.2026**
(21) Numéro de dépôt: 21732472.2
(22) Date de dépôt: 18.05.2021
(51) Int. Cl.: G10L 21/0208, B60R 16/037

(54) **SYSTEME D'AMPLIFICATION VOCALE POUR VEHICULE**
SPRACHVERSTÄRKUNGSSYSTEM FÜR EIN FAHRZEUG
VOICE AMPLICATION SYSTEM FOR A VEHICLE

(30) Priorité: 20.05.2020 FR 2005147
(43) Date de publication de la demande: 29.03.2023
(73) Titulaire: Saint-Gobain Sekurit France, 60150 Thourotte (FR)
(72) Inventeur: LALLEMENT, Antoine, 60200 COMPIEGNE (FR); BOURE, Jean-Philippe, 60170 RIBECOURT (FR); QI, Shuibao, 60200 COMPIEGNE (FR)
(74) Mandataire: Saint-Gobain Recherche
(86) Numéro de dépôt international: PCT/FR2021/050861
(87) Numéro de publication internationale: WO 2021/234268

(56) Documents cités:
- US-A1- 2019 106 069
- US-B1- 10 049 654

## Description

La présente invention est relative au domaine des systèmes d'amplification vocale pour véhicule.

### ART ANTÉRIEUR

Actuellement, il est connu que les véhicules du type automobile, en circulant, peuvent générer un milieu acoustique bruyant pour les passagers.

Ce bruit qui s'apparente à un bruit de fond entraine parfois une difficulté pour les passagers qui souhaitent communiquer entre eux.

En effet, l'un des principaux facteurs influant sur la facilité de communication est un ratio entre le signal (ici la voix) et le bruit (ici le bruit ambiant dans un habitacle automobile). Plus ce ratio dit « signal sur bruit » est important, plus la compréhension est facilitée.

Pour pallier cet inconvénient, on a cherché à améliorer ce ratio signal sur bruit. Il existe deux moyens permettant d'optimiser ce ratio qui sont de réduire le niveau du bruit ambiant (Isolation acoustique et vibratoire, solution active...) ou d'augmenter le niveau de la voix (= Signal).

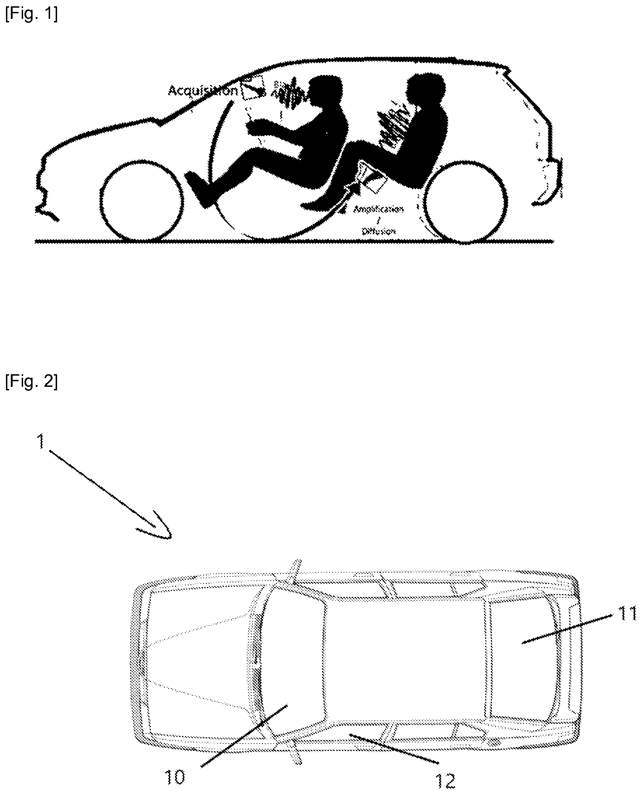

Des dispositifs ont été créés pour augmenter le niveau de la voix. Une solution connue consiste à avoir un véhicule dans lequel une personne parle (le conducteur par exemple). Le signal sonore est alors acquis par un microphone et est simultanément diffusé dans les haut-parleurs les plus proches des oreilles de ses interlocuteurs (un passager arrière par exemple) comme visible à la figure 1.

En plus de répondre partiellement à la problématique « signal sur bruit », ce système a l'avantage de créer artificiellement un champ direct entre le locuteur et l'auditeur.

Toutefois, un tel système présente l'inconvénient principal de devoir équiper chaque place assise du véhicule avec un microphone. Une telle installation nécessite que chaque microphone soit bien agencé pour permettre d'obtenir le meilleur signal sonore possible.

### RÉSUMÉ DE L'INVENTION

La présente invention est définie par les revendications indépendantes 1 et 8 et se propose de résoudre ces inconvénients en fournissant un dispositif permettant une amplification de la voix dans un véhicule qui soit simple et efficace.

L'invention présente donc l'avantage de pouvoir détecter des vibrations représentative d'un signal sonore, les transformer en un signal électrique, traité puis envoyer à un transducteur qui transforme ce signal électrique en un signal sonore, ce signal sonore étant identique ou sensiblement identique à celui ayant généré les vibrations. Ainsi, Les mots et la voix d'un passager génère des vibrations qui sont captées puis traitées pour fournir un signal utile envoyé à un transducteur qui génère un signal sonore sensiblement identique ou identique aux mots et à la voix dudit passager.

Selon un exemple, le véhicule est divisé en une zone avant et une zone arrière, ledit vitrage latéral muni dudit capteur de vibrations étant agencé dans la zone avant ou la zone arrière et en ce que ledit émetteur audio est agencé dans une zone différente dudit capteur.

Selon un exemple, le véhicule est divisé en une zone avant et une zone arrière, chaque zone comprenant au moins un vitrage latéral muni dudit capteur de vibrations et au moins un émetteur audio.

Selon un exemple, chaque zone comprend deux vitrages latéraux munis chacun dudit capteur de vibrations, ces vitrages latéraux étant placés de part et d'autre du véhicule.

Selon un exemple, le véhicule est divisé en un nombre de zone égale au nombre de vitrages latéraux, chaque zone comprenant un vitrage latéral muni dudit capteur de vibrations et un émetteur audio.

Selon un exemple, l'unité de calcul est apte à traiter un signal électrique représentatif d'un signal sonore dudit capteur de vibrations d'un vitrage latéral et à transmettre le signal utile vers l'émetteur audio des autres vitrages latéraux.

Selon un exemple, le véhicule comprenant en outre un module de présence comprenant des capteurs de présences permettant de savoir si des passagers sont installés, l'unité de calcul est apte à traiter un signal électrique représentatif d'un signal sonore dudit capteur de vibrations d'un vitrage latéral et à transmettre le signal utile vers l'émetteur audio des autres vitrages latéraux pour lesquels la présence d'un passager est détectée.

Selon un exemple, l'étape consistant à traiter ledit un signal électrique représentatif d'un signal sonore comprend un traitement numérique et/ou un premier étage de filtrage sur le signal électrique représentatif d'un signal sonore pour atténuer un bruit de fond lié à la dynamique du capteur et/ou à toute autres vibrations reçues sur le verre automobile lorsque le véhicule se déplace.

Selon un exemple, l'étape consistant à traiter ledit un signal électrique représentatif d'un signal sonore comprend, en outre, un second traitement numérique ou un second étage de filtrage pour compenser la teinte apportée sur les enregistrements par les résonances du verre.

### DESCRIPTION DES FIGURES

D'autres particularités et avantages ressortiront clairement de la description qui en est faite ci-après, à titre indicatif et nullement limitatif, en référence aux dessins annexés, dans lesquels:
- la fig. 1 est une représentation schématique d'un véhicule muni d'un système d'amplification vocale selon l'art antérieur ;
- la fig. 2 est une représentation schématique d'un véhicule muni d'un système d'amplification vocale selon l'invention ;
- la fig. 3 est une représentation schématique d'un système d'amplification vocale selon l'invention ;
- la fig. 4 est une représentation schématique d'un diagramme du signal représentatif de la voix généré par un microphone ou un capteur de vibrations selon l'invention ;
- la fig. 5 est une représentation schématique d'un système d'amplification vocale selon l'invention ;
- les fig. 6 à 10 sont des représentations schématiques des différentes configurations d'un véhicule muni dusystème d'amplification vocale selon l'invention.

### DESCRIPTION DETAILLÉE DE L'INVENTION

A la figure 2 est représentée un véhicule 1 selon l'invention. Ce véhicule peut être un véhicule à moteur comme un véhicule à combustion interne, un véhicule hybride, un véhicule électrique, un véhicule à pile à combustible et / ou tout autre type de véhicule avec un outil de mobilité. Le véhicule comprend des pièces liées à la mobilité, telles qu'un groupe motopropulseur à moteur, une transmission, une suspension, un arbre de transmission et / ou des roues, etc. Le véhicule peut être non autonome, semi-autonome (par exemple, certaines fonctions motrices de routine contrôlées par le véhicule), ou autonome (par exemple, les fonctions motrices sont contrôlées par le véhicule sans intervention directe du conducteur).

Le véhicule comprend en outre un pare-brise 10, une lunette arrière 11 et au moins un vitrage latéral ou vitre latérale 12, idéalement, côté conducteur et des sièges permettant à au moins deux passagers de prendre place dans ledit véhicule. Préférentiellement, le véhicule comprend une multitude de vitres latérales 12.

Selon l'invention, le véhicule comprend un système d'amplification vocale 20 permettant une meilleure communication entre passages. Ce système d'amplification vocale 20 utilise astucieusement une vitre latérale 12 comme moyen de réception vocale. Pour cela, le vitrage est muni d'un capteur de vibration 21. Ce capteur de vibration est un accéléromètre, pouvant être de différents types comme par exemple du type piézoélectrique ou du type MEMS, mais aussi de différentes formes (« standard » en cube, plat, compact,..).

Ce capteur de vibrations 21 est, de préférence, placé au niveau de la partie non-apparente des verres latéraux (partie où se situe les fixations de la vitre latérale qui est cachée par la garniture de porte).

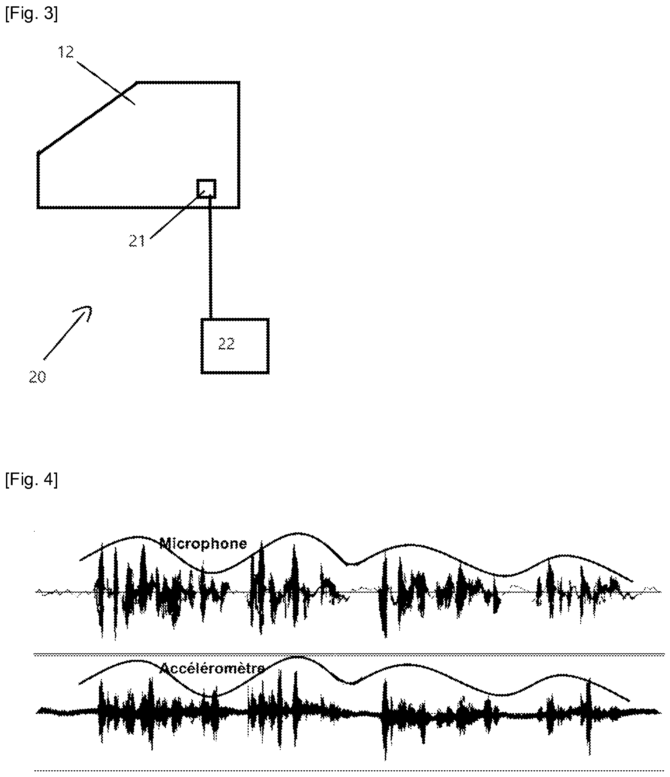

Ce capteur de vibrations 21 est agencé sur le vitrage pour permettre aux vibrations d'être captées par ledit capteur de vibrations. Pour cela, le capteur de vibrations 21 est interfacé avec le vitrage via une interface rigide de type adhésif/colle ou par un interfaçage par embase, par encapsulation. Ce capteur de vibrations est connecté à une unité de calcul 22 comme visible à la figure 3.

Effectivement, il a été constaté que les vibrations sonores dirigées vers le vitrage se propagent dans ledit vitrage. Plus intéressant, ces vibrations sonores captées par le capteur de vibrations permettent de générer un signal électrique représentatif dont la courbe est similaire à celles enregistrées par un microphone comme visible à la figure 4.

Par conséquent, les vibrations sonores captées par le capteur 21 peuvent être utilisées pour former un signal électrique représentatif d'un signal sonore Sv. Pour cela, le capteur de vibrations 21 envoie le signal électrique représentatif d'un signal sonore vers une unité de calcul 22 configurée pour gérer ce signal électrique représentatif d'un signal sonore. Cette unité de calcul 22 est, en premier lieu, utilisée pour réceptionner le signal électrique représentatif d'un signal sonore Sv et le transmettre.

Toutefois, l'unité de calcul 22 effectue, en outre, un traitement numérique sur le signal électrique représentatif d'un signal sonore et/ou un premier étage de filtrage. En effet, il a été remarqué que le signal électrique représentatif d'un signal sonore peut présenter un bruit de fond lié à la dynamique du capteur mais aussi à toute autres vibrations reçues sur le verre automobile lorsqu'une voiture roule.

Ce premier étage de filtrage est du type coupe-bas c'est-à-dire qu'il permet de nettoyer les basses fréquences.

Un second traitement numérique ou un second étage de filtrage est, optionnellement, envisagé pour compenser la teinte apportée sur les enregistrements par les résonances du verre.

Ce second étage de filtrage est du type coupe-haut c'est-à-dire qu'il permet de nettoyer les hautes fréquences.

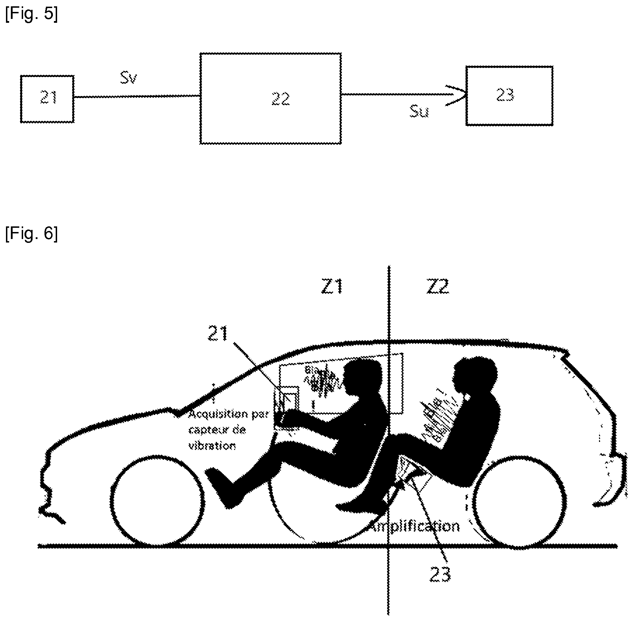

Le filtrage réalisé permet de conserver un intervalle de 50 à 1500Hz, de préférence, de 60Hz à 1200Hz. Cet intervalle de fréquence est celui de la voix humaine. Une fois ce ou ces traitements effectués, le signal représentatif d'un signal sonore traité devient un signal utile Su qui est envoyé, transmit vers au moins un transducteur électroacoustique 23 ou émetteur audio du type haut-parleur afin que celui-ci restitue un signal sonore comme visible à la figure 5. Le transducteur utilisé est situé à l'intérieur du véhicule et est, préférentiellement, un transducteur connecté à un appareil du type autoradio ou lecteur multimédia.

L'invention est astucieuse en ce que le traitement de l'unité de calcul 22 est direct c'est-à-dire que, lorsque cette fonction est activée / que l'unité de calcul 22 est activée, alors la récupération d'un signal électrique représentatif d'un signal sonore, son traitement en vue de l'obtention d'un signal utile et l'envoie de ce signal utile vers au moins un transducteur est automatique.

L'invention permet ainsi, à partir de vibrations représentative d'un signal sonore, de les récupérer pour générer un signal utile transmis à un transducteur. Le transducteur convertissant ledit signal utile en un signal sonore, sensiblement identique au signal sonore ayant généré les vibrations récupérées.

Selon l'invention, le véhicule est divisé en deux zones Z, une zone avant Z1 où se situe une vitre latérale avant gauche, une vitre latérale avant droite et une zone arrière Z2 où se situe une vitre latérale arrière gauche et une vitre latérale arrière droite, ces vitres sont munies d'un capteur de vibrations 21. Les vitres 12 d'une même zone Z1, Z2 sont ainsi placées de part et d'autre du véhicule. Basique ment, l'invention consiste à avoir une vitre 12 munie d'un capteur de vibrations 21 en zone Z1 et d'avoir un transducteur ou émetteur audio 23 en zone Z2 comme visible à la figure 6.

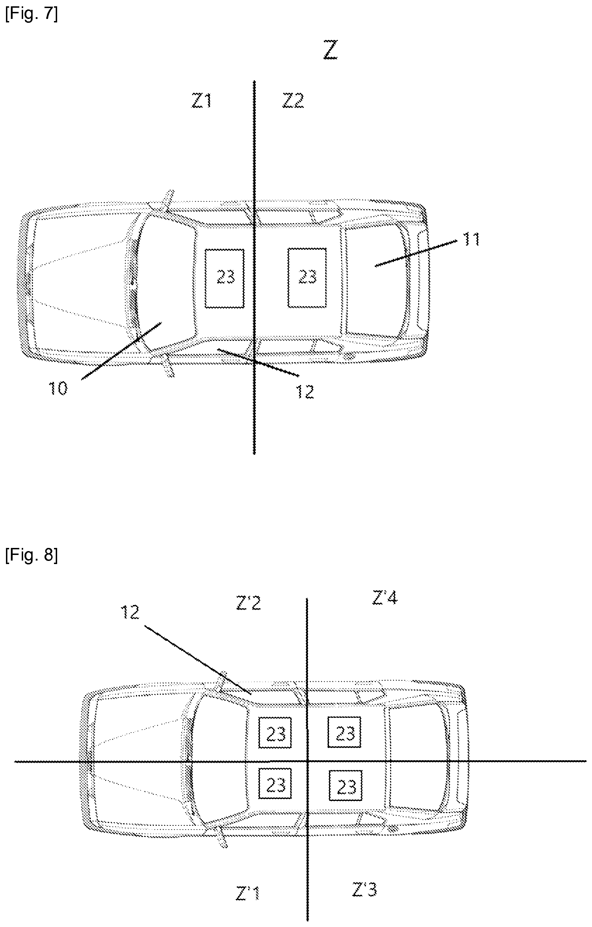

Dans une version préférée, le véhicule comprend au moins deux transducteurs électroacoustiques 23 : un au niveau de la zone avant Z1 et un au niveau de la zone arrière Z2 comme visible à la figure 7.

Le véhicule selon l'invention est conçu pour que le passager qui parle puisse voir son message être transmis aux autres passagers.

Pour cela, une première étape optionnelle consiste à activer le mode amplification de voix. Pour cela, une commande vocale ou manuelle via un commutateur est opérée. La commande vocale comprend un mot clé qui est détecté.

Une fois le mode amplification de voix activé, la détection d'un signal sonore, acoustique par un vitrage latéral ou vitre latérale 12 peut être effectuée. Or, dans un espace clos tel celui d'un véhicule, le son se propage de sorte que plusieurs vitrages latéraux captent un signal sonore représentatif de la voix d'un passager. Pour savoir le vitrage latérale correspondant au passager qui parle, on suppose que les amplitudes de vibration sont très faibles sur les vitrages qui ne sont pas à proximité directe du locuteur. Toutefois, il peut être envisagé de détecter le vitrage latéral par différentes formes :
- seuil de déclenchement (amplitude) à un certain niveau de vibration
- seuil de déclenchement par variation de la dynamique du signal
Mais cette sélection du vitrage peut être également réalisée par le déclenchement manuel (type bouton) ou déclenchement par reconnaissance vocale (par l'utilisation d'un mot clé par exemple).

Une fois la vitre latérale sélectionnée, le capteur de vibrations 21 associé capte les vibrations qui se propagent sur la vitre latérale 12 et génère un signal représentatif d'un signal sonore Vs envoyé à une unité de calcul 22 pour traitement. Cette unité de calcul 22 génère et envoie ainsi le signal utile Su vers un transducteur électroacoustique 23.

Si le passager qui parle est au niveau de la zone avant Z1 alors le signal utile Su est envoyé vers le transducteur électroacoustique 23 situé au niveau de la zone arrière Z2 et inversement si le passager qui parle est à l'arrière alors le signal utile Su est envoyé vers le transducteur électroacoustique 23 situé à l'avant en zone Z1.

Dans une première variante, le système d'amplification vocale 20 est plus évolué. Pour cela, chaque vitre latérale 12 munie d'un capteur de vibrations 21 est associée à un transducteur électroacoustique 23. On comprend ainsi que le véhicule comprend un transducteur électroacoustique 23 agencé vers une vitre latérale 12 avant gauche, un second agencé vers une vitre latérale 12 avant droite, un troisième agencé vers une vitre latérale 12 arrière gauche et un quatrième agencé vers une vitre latérale 12 arrière droite. On retrouve ainsi virtuellement avec quatre zones Z: avant gauche Z'1, avant droit Z'2, arrière gauche Z'3 et arrière droit Z'4 comme visible à la figure 8.

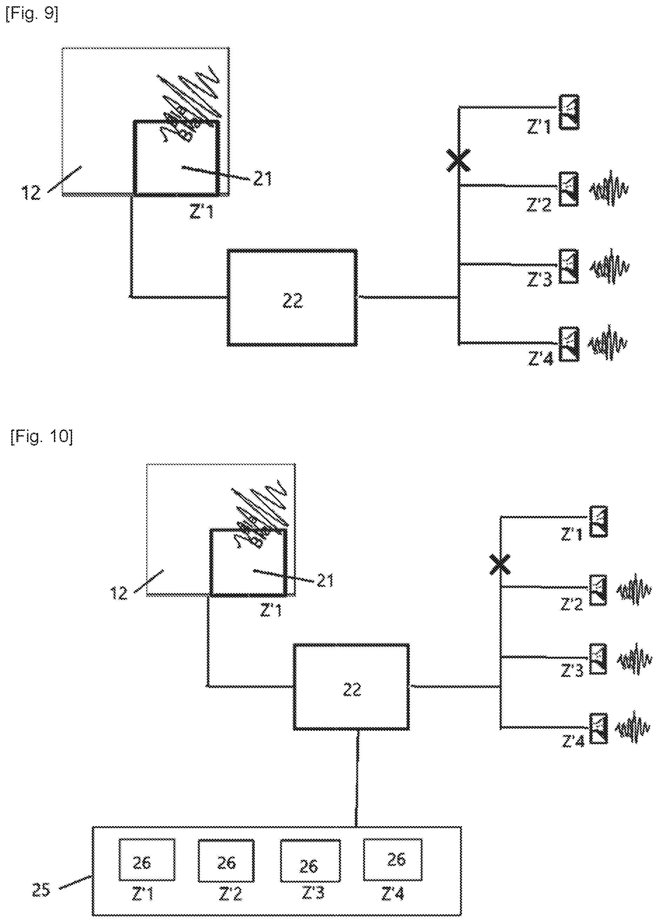

Cette variante permet avantageusement à l'unité de calcul 22 d'envoyer le signal utile Su vers le transducteur électroacoustique 23 de chaque vitre latérale 12 non sélectionnée permettant aux autres passagers d'entendre la voix du locuteur comme visible à la figure 9.

Dans une seconde variante compatible avec la première variante visible à la figure 10, le système d'amplification vocale est associé à un module de présence 25. Ce module de présence 25 comprend en outre des capteurs de présence 26. Ces capteurs de présence 26 sont, par exemple, des capteurs de force ou pression installés sous chaque siège permettant de savoir si une personne est assise ou non.

Ces capteurs de présence 26 sont connectés à l'unité de calcul 22, celle-ci est ainsi capable de savoir combien de passagers sont présents et leur localisation.

Par conséquent, l'unité de calcul 22 qui reçois un signal représentatif d'un signal sonore va le traiter et l'envoyer vers le ou les transducteurs pour le(s)quel(s) la présence d'un passager est détectée. Par exemple, en supposant qu'hormis le conducteur, seul le passager arrière droit est présent alors un signal représentatif d'un signal sonore généré par un capteur de vibrations au niveau de la vitre avant gauche est traité puis le signal utile est envoyé vers le transducteur électroacoustique agencé vers une vitre latérale arrière droite.

Bien entendu, la présente invention ne se limite pas à l'exemple illustré mais est susceptible de diverses variantes et modifications qui apparaîtront à l'homme de l'art.

En effet, il est possible que le parebrise ou la lunette arrière voire un toit ouvrant soient utilisés comme support pour un ou plusieurs capteurs de vibrations 21.

De plus, il est envisageable d'avoir un nombre de zone Z' égal au nombre de vitrages latéraux. En effet, pour les véhicule de grande taille comprenant au moins trois rangées de sièges, il faut que la totalité des passagers soient concernés par le système selon l'invention. Ainsi, chaque vitrage latéral appartient à une zone comprenant ledit vitrage latéral, un capteur de vibrations 21 agencé sur le vitrage latéral et un émetteur audio. Cela permet à l'unité de calcul 22 de transmettre le signal utile Su vers les zones Z' autres que celle dans laquelle le capteur de vibrations 21 a généré un signal représentative Sv.

Bien entendu, le véhicule selon l'invention comprend, optionnellement, un moyen de commande, intégré dans l'ordinateur de bord du véhicule ou spécifique comme un interrupteur, permettant d'activer ou non la fonction de l'invention c'est-à-dire la fonction permettant de capter les vibrations d'un vitrage pour en récupérer au moins un signal utile représentatif d'une voix qui est envoyé par ladite unité de calcul vers un émetteur audio. Les capteurs de présence 26 peuvent être utilisés pour détecter des passagers et activer ou non ledit fonction

## Revendications

1. Véhicule (1) comprenant,
Au moins un vitrage latéral (12);
Au moins un capteur de vibrations (21) agencé sur le vitrage latéral pour détecter des vibrations sonores se propageant sur ledit vitrage (12) ;
Au moins un émetteur audio (23) ;
Une unité de calcul (22) connectée audit capteur de vibrations (21) et à l'émetteur audio (23) ;
**caractérisé en ce que** ladite unité de calcul (22) est configurée pour recevoir dudit capteur de vibrations (21) un signal électrique représentatif d'un signal sonore (Sv) représentatif de la voix d'un passager, pour traiter ce signal sonore (Sv) afin d'isoler un signal utile (Su) représentatif de ladite voix du passager, le signal utile (Su) représentatif de la voix du passager étant envoyé par ladite unité de calcul (22) vers ledit émetteur audio (23) situé à l'intérieur du véhicule (1).

2. Véhicule (1) selon la revendication précédente dans lequel le véhicule (1) est divisé en une zone avant (Z1) et une zone arrière (Z2), ledit vitrage latéral (12) muni dudit capteur de vibrations (21) étant agencé dans la zone avant (Z1) ou la zone arrière (Z2) et en ce que ledit émetteur audio (23) est agencé dans une zone différente dudit capteur de vibrations (21).

3. Véhicule (1) selon la revendication 1, dans lequel le véhicule (1) est divisé en une zone avant (Z1) et une zone arrière (Z2), chaque zone (Z1, Z2) comprenant au moins un vitrage latéral (12) muni dudit capteur de vibrations (21) et au moins un émetteur audio (23).

4. Véhicule (1) selon la revendication 3, dans lequel chaque zone (Z1, Z2) comprend deux vitrages latéraux (12) munis chacun dudit capteur de vibrations (21), ces vitrages latéraux (12) étant placés de part et d'autre du véhicule (1).

5. Véhicule (1) selon la revendication 1, dans lequel le véhicule (1) est divisé en un nombre de zone (Z) égale au nombre de vitrages latéraux (12), chaque zone comprenant un vitrage latéral (12) muni dudit capteur de vibrations (21) et un émetteur audio (23).

6. Véhicule (1) selon la revendication 5, dans lequel l'unité de calcul (22) est apte à traiter un signal électrique représentatif du signal sonore (Sv) dudit capteur de vibrations (21) d'un vitrage latéral (12) et à transférer le signal utile (Su) vers l'émetteur audio (23) des autres vitrages latéraux (12).

7. Véhicule (1) selon la revendication 6, comprenant en outre un module de présence (25) comprenant des capteurs de présence (26) permettant de savoir si des passagers sont installés, l'unité de calcul (22) est apte à traiter un signal électrique représentatif d'un signal sonore (Sv) dudit capteur de vibrations (21) d'un vitrage latéral (12) et à transférer le signal utile (Su) vers l'émetteur audio (23) des autres vitrages latéraux (12) pour lesquels la présence d'un passager est détectée.

8. Procédé d'amplification de voix d'un véhicule (1) comprenant au moins un vitrage latéral (12), au moins un capteur de vibrations (21) agencé sur le vitrage latéral pour détecter des vibrations sonores se propageant sur ledit vitrage (12), au moins un émetteur audio (23) et une unité de calcul (22) connectée audit capteur de vibrations (21) et à l'émetteur audio (23), ladite unité de calcul étant configurée pour :
- détecter, par le capteur de vibrations (21), un signal sonore (Sv) représentatif de la voix d'un passager ;
- générer, par ledit capteur de vibrations (21), un signal électrique représentatif dudit signal sonore (Sv) ;
- envoyer le signal électrique représentatif du signal sonore (Sv) à l'unité de calcul (22) ;
- traiter ledit un signal électrique représentatif du signal sonore (Sv) pour fournir un signal utile (Su) ;
- envoyer ledit signal utile (Su) vers au moins un émetteur audio (23) situé à l'intérieur du véhicule (1).

9. Procédé d'amplification selon la revendication 8, dans lequel l'étape consistant à traiter ledit un signal électrique représentatif du signal sonore (Sv) comprend un traitement numérique et/ou un premier étage de filtrage sur le signal électrique représentatif du signal sonore (Sv) pour atténuer un bruit de fond lié à la dynamique du capteur et/ou à toute autres vibrations reçues sur le verre automobile lorsque le véhicule (1) se déplace.

10. Procédé d'amplification selon la revendication 9, dans l'étape consistant à traiter ledit un signal électrique représentatif du signal sonore (Sv) comprend, en outre, un second traitement numérique ou un second étage de filtrage filtrant pour compenser la teinte apportée sur les enregistrements par les résonances du verre.

## Patentansprüche

1. Fahrzeug (1) umfassend,
mindestens eine Seitenverglasung (12);
mindestens einen Vibrationssensor (21), der auf der Seitenverglasung zum Erfassen von Schallvibrationen angeordnet ist, die sich auf der Verglasung (12) ausbreiten;
mindestens einen Audiosender (23);
eine Recheneinheit (22), die mit dem Vibrationssensor (21) und dem Audiosender (23) verbunden ist;
**dadurch gekennzeichnet, dass** die Recheneinheit (22) zum Empfangen, von dem Vibrationssensor (21), eines elektrischen Signals konfiguriert ist, das ein Schallsignal (Sv) abbildet, das die Stimme eines Passagiers abbildet, zum Aufbereiten dieses Schallsignals (Sv), um ein Nutzsignal (Su) zu isolieren, das die Stimme des Passagiers abbildet, wobei das Nutzsignal (Su), das die Stimme des Passagiers abbildet, durch die Recheneinheit (22) zu dem Audiosender (23), der im Inneren des Fahrzeugs (1) gelegen ist, gesendet wird.

2. Fahrzeug (1) nach dem vorstehenden Anspruch, wobei das Fahrzeug (1) in eine vordere Zone (Z1) und eine hintere Zone (Z2) unterteilt ist, wobei die Seitenverglasung (12), die mit dem Vibrationssensor (21) ausgestattet ist, in der vorderen Zone (Z1) oder der hinteren Zone (Z2) angeordnet ist, und wobei der Audiosender (23) in einer unterschiedlichen Zone als der Vibrationssensor (21) angeordnet ist.

3. Fahrzeug (1) nach Anspruch 1, wobei das Fahrzeug (1) in eine vordere Zone (Z1) und eine hintere Zone (Z2) unterteilt ist, jede Zone (Z1, Z2) umfassend mindestens eine Seitenverglasung (12), die mit dem Vibrationssensor (21) ausgestattet ist, und mindestens einen Audiosender (23).

4. Fahrzeug (1) nach Anspruch 3, wobei jede Zone (Z1, Z2) zwei Seitenverglasungen (12) umfasst, die jeweils mit dem Vibrationssensor (21) ausgestattet sind, wobei diese Seitenverglasungen (12) auf beiden Seiten des Fahrzeugs (1) platziert sind.

5. Fahrzeug (1) nach Anspruch 1, wobei das Fahrzeug (1) in eine Anzahl von Zonen (Z) unterteilt ist, die gleich der Anzahl von Seitenverglasungen (12) ist, jede Zone umfassend eine Seitenverglasung (12), die mit dem Vibrationssensor (21) und einem Audiosender (23) ausgestattet ist.

6. Fahrzeug (1) nach Anspruch 5, wobei die Recheneinheit (22) zum Aufbereiten eines elektrischen Signals, das das Schallsignal (Sv) des Vibrationssensors (21) einer Seitenverglasung (12) abbildet, und zum Übertragen des Nutzsignals (Su) zu dem Audiosender (23) der anderen Seitenverglasungen (12) geeignet ist.

7. Fahrzeug (1) nach Anspruch 6, ferner umfassend ein Anwesenheitsmodul (25), umfassend Anwesenheitssensoren (26), die es ermöglichen zu wissen, ob Passagiere installiert sind, wobei die Recheneinheit (22) zum Aufbereiten eines elektrischen Signals, das ein Schallsignal (Sv) des Vibrationssensors (21) einer Seitenverglasung (12) abbildet, und zum Übertragen des Nutzsignals (Su) an den Audiosender (23) der anderen Seitenverglasungen (12), für die die Anwesenheit eines Passagiers erfasst wird, geeignet ist.

8. Verfahren zum Verstärken von Stimmen in einem Fahrzeug (1), umfassend mindestens eine Seitenverglasung (12), mindestens einen Vibrationssensor (21), der auf der Seitenverglasung zum Erfassen von Schallvibrationen angeordnet ist, die sich auf der Verglasung (12) ausbreiten, mindestens einen Audiosender (23) und eine Recheneinheit (22), die mit dem Vibrationssensor (21) und dem Audiosender (23) verbunden ist, wobei die Recheneinheit konfiguriert ist zum:
- Erfassen, durch den Vibrationssensor (21), eines Schallsignals (Sv), das die Stimme eines Passagiers abbildet;
- Generieren, durch den Vibrationssensor (21), eines elektrischen Signals, das das Schallsignal (Sv) abbildet;
- Senden des elektrischen Signals, das das Schallsignal (Sv) abbildet, an die Recheneinheit (22);
- Aufbereiten des einen elektrischen Signals, das das Schallsignal (Sv) abbildet, zum Bereitstellen eines Nutzsignals (Su);
- Senden des Nutzsignals (Su) zu mindestens einem Audiosender (23), der im Inneren des Fahrzeugs (1) gelegen ist.

9. Verfahren zum Verstärken, nach Anspruch 8, wobei der Schritt, der in dem Aufbereiten des einen elektrischen Signals besteht, das das Schallsignal (Sv) abbildet, eine digitale Aufbereitung und/oder eine erste Filterstufe des elektrischen Signals, das das Schallsignal (Sv) abbildet, zum Dämpfen eines Hintergrundrauschens, das mit der Dynamik des Sensors und/oder mit allen anderen Vibrationen verbunden ist, die auf dem Automobilglas empfangen werden, wenn sich das Fahrzeug (1) bewegt, umfasst.

10. Verfahren zum Verstärken nach Anspruch 9, wobei der Schritt, der in dem Aufbereiten des einen elektrischen Signals besteht, das das Schallsignal (Sv) abbildet, ferner eine zweite digitale Aufbereitung oder eine zweite Filterstufe zum Ausgleichen der Verzerrung, die sich in den Aufnahmen durch die Resonanzen des Glases ergibt, umfasst.

## Claims

1. A vehicle (1) comprising,
At least one side glazing (12);
At least one vibration sensor (21) arranged on the side glazing for detecting sound vibrations propagating on said glazing (12);
At least one audio transmitter (23);
A computing unit (22) connected to said vibration sensor (21) and to the audio transmitter (23);
**characterized in that** said computing unit (22) is configured to receive from said vibration sensor (21) an electrical signal representative of an audio signal (Sv) representative of the voice of a passanger, to process this audio signal (Sv) in order to isolate a useful signal (Su) representative of the voice of the passanger, the useful signal (Su) representative of the voice being sent by said computing unit (22) to said audio transmitter (23) located inside the vehicle (1).

2. A vehicle (1) according to the preceding claim, wherein the vehicle (1) is divided into a front zone (Z1) and a rear zone (Z2), said side glazing (12) provided with said vibration sensor (21) being arranged in the front zone (Z1) or the rear zone (Z2) and in that said audio transmitter (23) is arranged in a zone different from said vibration sensor (21).

3. A vehicle (1) according to claim 1, wherein the vehicle (1) is divided into a front zone (Z1) and a rear zone (Z2), each zone (Z1, Z2) comprising at least one side glazing (12) provided with said vibration sensor (21) and at least one audio transmitter (23).

4. A vehicle (1) according to claim 3, wherein each zone (Z1, Z2) comprises two side glazings (12) each provided with said vibration sensor (21), these side glazings (12) being placed on opposite sides of the vehicle (1).

5. A vehicle (1) according to claim 1, wherein the vehicle (1) is divided into a number of zones (Z) equal to the number of side glazings (12), each zone comprising a side glazing (12) provided with said vibration sensor (21) and an audio transmitter (23).

6. A vehicle (1) according to claim 5, wherein the computing unit (22) is able to process an electrical signal representative of the audio signal (Sv) from said vibration sensor (21) of a side glazing (12) and to transfer the useful signal (Su) to the audio transmitter (23) of the other side glazings (12).

7. A vehicle (1) according to claim 6, further comprising a presence module (25) comprising presence sensors (26) allowing for knowing whether passengers are seated, the computing unit (22) is able to process an electrical signal representative of an audio signal (Sv) from said vibration sensor (21) of a side glazing (12) and to transfer the useful signal (Su) to the audio transmitter (23) of the other side glazings (12) for which the presence of a passenger is detected.

8. A voice amplification method for a vehicle (1), comprising at least one side glazing (12), at least one vibration sensor (21) arranged on the side glazing for detecting sound vibrations propagating on said glazing (12), at least one audio transmitter (23) and a computing unit (22) connected to said vibration sensor (21) and to the audio transmitter (23), said computing unit being configured for:
- detecting, via the vibration sensor (21), an audio signal (Sv) representative of the voice of a passenger;
- generating, via said vibration sensor (21), an electrical signal representative of the audio signal (Sv);
- sending the electrical signal representative of the audio signal (Sv) to the computing unit (22);
- processing said electrical signal representative of the audio signal (Sv) to provide a useful signal (Su);
- sending said useful signal (Su) to at least one audio transmitter (23) located inside the vehicle (1).

9. An amplification method according to claim 8, wherein the step of processing said one electrical signal representative of the audio signal (Sv) comprises a digital processing and/or a first step of filtering the electrical signal representative of the audio signal (Sv) to attenuate a background noise related to the dynamics of the sensor and/or to any other vibrations received on the automotive glass when the vehicle (1) is moving.

10. An amplification method according to claim 9, wherein the step consisting of processing said one electrical signal representative of the audio signal (Sv) further comprises a second digital processing or second step of filtering that filters to offset the distortion of recordings by glass resonances.
